# EUROPEAN PATENT APPLICATION

(11) **EP 2 672 436 A1**
(43) Date of publication of application: **11.12.2013**
(21) Application number: 13171332.3
(22) Date of filing: 10.06.2013
(51) Int. Cl.: G06Q 10/02

(54) **User interface with onboard ticket validation and collection**

(30) Priority: 08.06.2012 US 201261657445 P; 03.12.2012 US 201213692385
(71) Applicant: National Railroad Passenger Corporation, Washington DC WA 20002 (US)
(72) Inventor: Behun, Gregory Irwin, Perryville, MD 21903 (US); Toczylowski, Michael Thomas, Annapolis, MD 21401 (US); Flynn, Anthony Paul, Falls Church, VA 22043 (US)
(74) Representative: Debay, Yves

(57) **Abstract**

Methods, systems and computer program products for onboard ticket validation and ticket collection for railroad passengers and providing touchscreen interfaces for display of passenger and ticket related information on a mobile communication device.

## Description

### Background

Since the beginning of the passenger rail industry in the United States, little effort has been paid to modernizing the onboard ticket validation and collection process. Employees who are responsible for ticket validation and collection continue to use outdated and manual methods and tools; validation is completed by visually inspecting the ticket; a hole punch is used to mark that a ticket has been used; tickets are manually collected and stored in an envelope to document the presence of each passenger onboard a train.

Furthermore, prior to the train's departure from its origin station, employees are provided with paper lists of passengers expected to board the train at each station from which they manually tally the number of expected passengers and review for passengers requiring special assistance. These lists do not reflect passengers who may have added or modified their reservation after the employee has begun his shift. As an employee's shift may be as long as 12 hours, these lists are almost always incomplete and inaccurate by the end of the employee's trip.

These existing manual methods for validating tickets, documenting passengers onboard and providing employees with passenger information are often cumbersome and inefficient and place the burden on the employee to accurately review tickets when their other duties may include the safe operation of the train. In addition, these methods often lack the ability to provide timely and accurate data. For example, it may take up to two weeks before the train company has a complete record of all passengers who traveled on a specific train. This latter consideration may be further significant in the event of a train emergency.

Therefore, in order to overcome or alleviate shortcomings with existing manual methods for onboard ticket validation and collection, one or more embodiments of the present invention provide systems and methods for presenting a user interface to the employee that facilitates ticket validation, eliminates or reduces manual ticket collection and provides accurate and timely information about passengers expected to be onboard the train as well as passengers who are actually confirmed to be onboard the train.

In particular, some of the embodiments of the invention solve at least one problem of the prior art by at least one of the below embodiments:

A system for use of an electronic ticket, called eTicket, the system comprising at least one server storing data relating to the eTickets reserved for at least one train and at least one mobile device communicating with said at least one server, **characterized in that** :
- said mobile device comprises a user interface which presents the passenger information for eTickets on a specific train and, based on data sent from the server to the mobile device, displaying reservations for passengers holding tickets which may be valid for the specified train passenger names, displayinga passenger manifest including passenger counts for passengers boarding and detraining at each station and possibly passengers who require special assistance at each station,
- said server and mobile device communicate for generating and updating the passenger manifest with new reservations or changes to existing reservations while the specified train is in motion.

A method for managing electronic tickets, called eTickets, by a system comprising at least one server storing data relating to the eTickets reserved for at least one train and at least one mobile device communicating with said at least one server, **characterized in that** the method is a computer-implemented method comprising presenting a user interface which presents the passenger information for eTickets on a specific train and further comprises:
displaying, on a screen of the Mobile Device of a user, a touchscreen interface for displaying reservations for passengers holding tickets which may be valid for the specified train passenger names
displaying, on a screen of a Mobile Device of a user, the passenger manifest including passenger counts for passengers boarding and detraining at each station and possibly passengers who require special assistance at each station;
generating and updating the passenger manifest with new reservations or changes to existing reservations while the specified train is in motion, through communication between the server and the mobile device.

A method according to the invention, **characterized in that** it comprises finding a specific reservation on a Mobile Device through the use of scanning a barcode or via a manual search method on said mobile device based on data received from said server.

A method according to the invention, **characterized in that** it comprises validating that a specific ticket is valid for travel on a specific train, by implementation of at least :
Validation that the ticket has not been used, refunded, cancelled or otherwise modified so as to not be valid for the specified train.
Validation that the ticket does not contain blackout restrictions which prevent use on the specified train

A method according to the invention, **characterized in that** it comprises accurately recording, on said Mobile Device, passengers that are onboard a specific train, by implementation of at least:
Indicate that a specific ticket has been lifted on the specified train by modifying a ticket status to indicate that the ticket has been used.
Modifying an origin and/or destination to accurately reflect the customers intended travel itinerary.
Providing a means to document customers onboard the train who do not have valid tickets for the specified train

A method for finding a specific reservation on a Mobile Device through the use of scanning a barcode or via a manual search method.

A method of validating on a Mobile Device that a specific ticket is valid for travel on a specific train, the method comprising:
Validation that the ticket has not been used, refunded, cancelled or otherwise modified so as to not be valid for the specified train.
Validation that the ticket does not contain blackout restrictions which prevent use on the specified train.

A method of accurately recording on a Mobile Device passengers that are onboard a specific train, the method comprising:
Indicate that a specific ticket has been lifted on the specified train by modifying a ticket status to indicate that the ticket has been used.
Modifying an origin and/or destination to accurately reflect the customers intended travel itinerary.
Providing a means to document customers onboard the train who do not have valid tickets for the specified train.

A system for use of an electronic ticket, **characterized in that** it comprises means for implementation of at least one of the claims 2 to 8.

There are many convenient distribution channels, i.e., online, mobile, self-service kiosks, automated voice response agents via telephone, contact centers, station agents, or travel agents, through which passengers may book and pay for travel. In many of these situations, passengers are provided an option to print a bar-coded travel document, e.g., via a website, receive travel document information and bar coded information on a mobile device such as a telephone, or receive a printed copy of the bar-coded travel documents at a self-service kiosk.

In an airline-based example, a passenger relinquishes a travel document, e.g. a bar-coded travel document or ticket, prior to being allowed to board a plane.

In a train-based example, the passenger need not relinquish the travel document prior to being allowed to board the train. In many instances, the travel document is not relinquished (also referred to as "lifted") until after travel on the train has begun.

### Description of the Drawings

One or more embodiments are illustrated by way of example, and not by limitation, in the figures of the accompanying drawings, wherein elements having the same reference numeral designations represent like elements throughout and wherein:
- FIG. 1 is a logical decomposition diagram of an electronic ticketing application solution architecture according to an embodiment;
- FIG. 2 is a sequence flow diagram of primary data flows in the FIG. 1 electronic ticketing application solution architecture for logging into and initiating a mobile device;
- FIG. 3 is a sequence flow diagram of primary data flows in the FIG. 1 electronic ticketing application solution architecture for using a mobile device to validate a bar coded travel document and to record an electronic ticket as used;
- FIG. 4 is a sequence flow diagram of primary data flows in the FIG. 1 electronic ticketing application solution architecture for updating a passenger name list;
- FIG. 5 is a sequence flow diagram of primary data flows in the FIG. 1 electronic ticketing application solution architecture for querying the central reservation system;
- FIG. 6 is a sequence flow diagram of primary data flows in the FIG. 1 electronic ticketing application solution architecture for indication of completion of a ticket validation process;
- FIG. 7 is a high-level block diagram of a processing device useable in conjunction with one or more embodiments;
- FIG. 8 is a high level block diagram of a portable or transportable computer system upon which at least a portion of an embodiment may be implemented;
- FIG. 9 depicts the flow diagram presenting a method for a specific employee to log into and initiate the eLift application on the Mobile Device in at least one embodiment;
- FIG. 10 depicts the flow diagram presenting a method for an employee to use the eLift application to search for a reservation, confirm a ticket is valid for a specific train and electronically collect that ticket in at least one embodiment;
- FIG. 11 depicts the flow diagram presenting a method for an employee to use the eLift application to accept a large number of tickets for another train in at least one embodiment;
- FIG. 12a-12d are screen shots of the login and startup screens as displayed in the eLift application on the Mobile Device in at least one embodiment;
- FIG. 13a-13c are screen shots of the passenger manifest and station statistics that are displayed to the employee on the user interface of the Mobile Device in at least one embodiment;
- FIG. 14a-14b are screen shots of the search interface which allows an employee to search for a passenger's reservation in at least one embodiment;
- FIG. 15a-15d are screen shots of the reservation information that is returned when a reservation is found either through scanning a barcode or by searching using search capabilities of the eLift application in at least one embodiment;
- FIG. 16 is a screen shot of the touchscreen interface which the employee will use to enter identifying information for customers which do not have valid tickets for the specified train in at least one embodiment;
- FIG. 17a-17c are screen shots of the functionality provided by the eLift application which will allow the employee to modify the origin and/or destination of the passenger on the passenger manifest in at least one embodiment;
- FIG. 18 is a screen shot of the display of the passenger counts by ticket type that is displayed on the user interface of the eLift application in at least one embodiment;

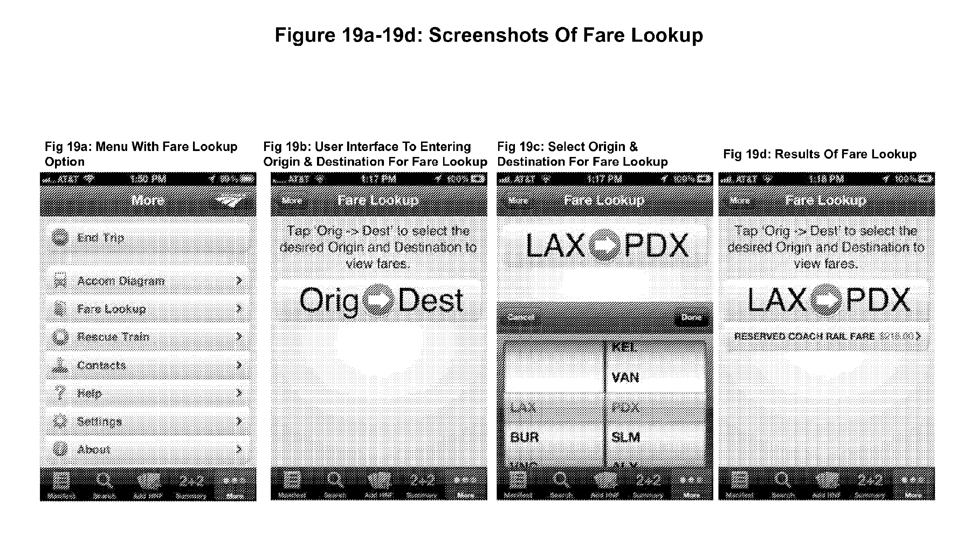

- FIG. 19a-19d are screen shots of fare lookup functionality provided by the eLift application in at least one embodiment; and

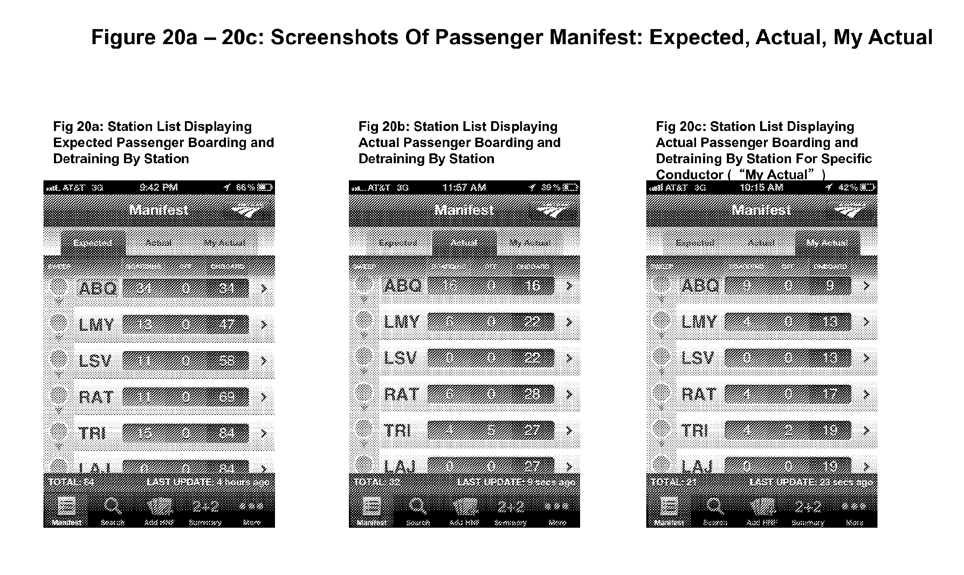

- FIG. 20a-20c are screen shots of the display of passenger manifest provided by the eLift application in at least one embodiment.

### Detailed Description

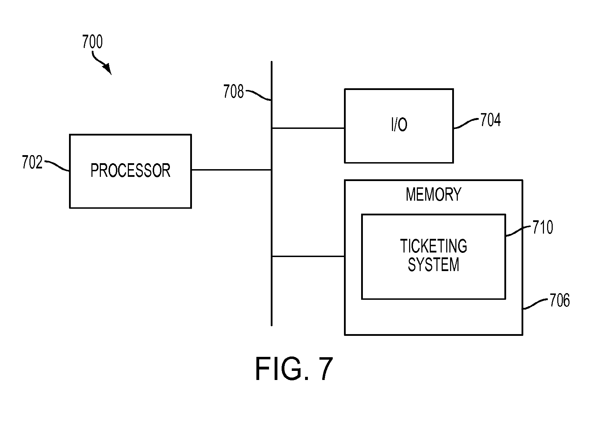

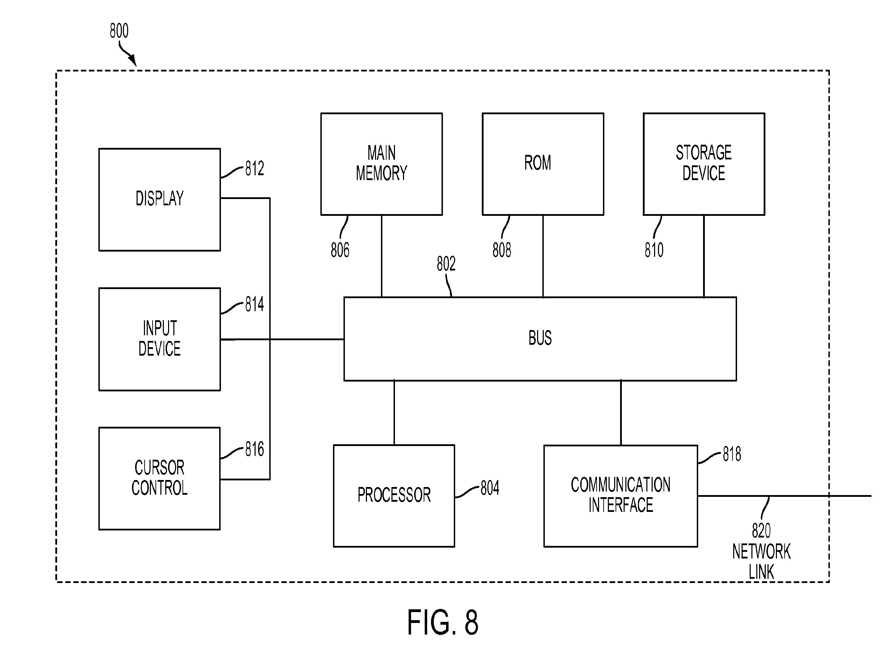

The described ticketing solution, e.g., an eTicketing solution in at least one embodiment, is designed to support one or more of an open access passenger rail operation, uniquely utilize mobile technology to validate electronic tickets (eTickets) and establish a manifest of passengers on board the train while in transit. In at least some embodiments, the solution provides employees who are tasked with validating and collecting tickets a user interface which efficiently allows them to validate and collect electronic tickets and establish the manifest of passengers on board the train. In at least some embodiments, at least a portion of the eTicketing solution is referred to as the eLift application. The eLift application comprises a set of executable instructions which, when executed by a processor, controller, computer system, or the like, causes the processor to perform one or more of the described functionalities. In at least some embodiments, the eLift application is stored in main memory 806 (FIG. 8) of mobile device 800. In at least some embodiments, mobile device 800 is configured to download the eLift application from controller 700 (FIG. 7).

The following are one or more features found in one or more embodiments of the electronic ticketing solution.

Employees with responsibility for ensuring passengers have paid their fare are equipped with mobile device that is used to scan a bar code on a customer-supplied printed document, a bar code on a customer-supplied mobile device or to look up the customer's eTicket using the customer name, reservation confirmation number or frequent traveler number. In at least some embodiments, the mobile device includes mobile phone and/or mobile processor with network capability technology.

Passengers are able to print bar coded travel documents or receive them on their mobile device.

The bar code provided to the passenger references the reservation record and thus may represent multiple passengers traveling together over multiple travel segments.

Passengers may change a reservation (i.e., date or time of travel, class of service etc.) and still use the same bar coded media for travel since the bar code references the current version of the reservation record.

A manifest of passengers on board a train is established as each passenger's travel document is validated aboard the train.

The manifest information is maintained in the central reservations system as well as on the mobile device itself.

As there may be multiple employees accountable for travel document validation on any given train, the status of electronic tickets assigned to the train in question is synchronized between the devices.

To use the mobile device, employees must be authenticated through a log in process.

Successful authentication enables application and device capabilities commensurate with the employee's duties and responsibilities.

Once an employee has been successfully authenticated on the mobile device, the employee must log the device onto the train the employee is working.

Once the mobile device is successfully logged to the train, current ticketing data for the train in question is wirelessly uploaded to the mobile device from the central reservations system via a wireless network connection, e.g., a wi-fi connection, a cellular connection, or another mobile network connectivity mechanism.

In at least some embodiments, mobile device is connected via a wired network connection in order to upload ticketing data and other information to/from the mobile device and other systems.

As additional sales, cancellations, exchanges or refunds occur that pertain to the train in question, the mobile device receives near-real time wireless updates from the central reservations system via the network connection.

As customer-supplied bar coded media is scanned, the mobile device searches its resident eTicket database for a matching ticket.

When found, the employee using the mobile device will "accept" the passenger's eTicket and so indicate on the mobile device.

If for some reason the eTicket in question is not resident on the mobile device, the employee using the device can query the central reservations system database to obtain the eTicket data.

When the employee "accepts" the passenger's eTicket, the eTicket status is immediately changed to "used" by the mobile device and the central reservation system and other relevant mobile devices are updated wirelessly on a near-real time basis via a wi-fi or cellular connection.

The transmission of data from the central reservations system to the mobile device is managed through a tiered mobile technology architecture that consists of a business logic layer that determines which eTicket data is to be sent to which mobile device and a message delivery layer that ensures reliable delivery of the messages to and from the specific mobile device.

In at least some embodiments, the central reservations system produces a current manifest of passengers aboard any given train at any time.

The mobile device is remotely provisioned to limit user capabilities to pertinent business applications and business-related telephone numbers.

### Processes

### Passenger

Passengers book and pay for train travel through any convenient distribution channel (i.e., online, mobile, self-service kiosk, automated voice response agent, contact center, station agent or travel agent). Passengers are provided the option to print their bar coded travel document themselves through the website, receive the travel document information and bar code on their mobile device or obtain a printed copy of their bar coded travel document at the station's self-service kiosk (where available) or station agent. At locations where kiosks or agents are not available and if the passenger does not have the option to print their own travel document or receive it on their mobile device, the passenger may board the train, providing the train employee with the their name, reservation number or Amtrak Guest Reward (Amtrak's frequent traveler program) number to identify the eTicket on the mobile device. The passenger will be asked to provide photo identification.

### Employee

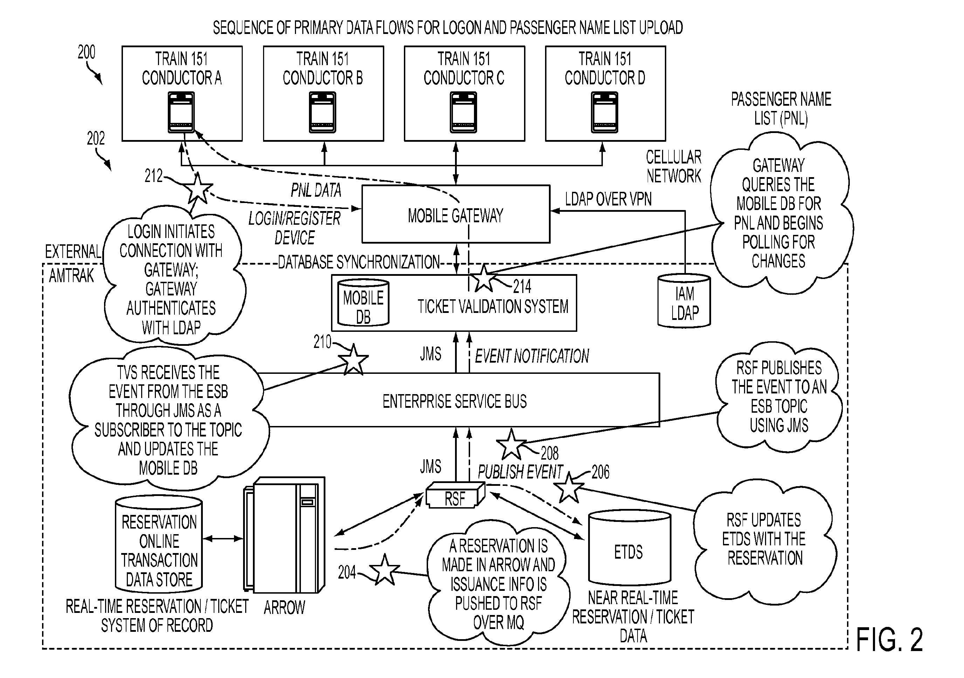

The employee(s) tasked with validating eTickets first signs-on to the mobile device to activate the appropriate business applications. Next, the employee logs the mobile device onto the train on which eTickets will be validated. Upon successful log-on, eTicket data for the train in question is, wirelessly in at least some embodiments, uploaded via a wireless network connection to the device. If multiple mobile devices are logged onto the same train, each device receives the eTicket data. The employee then walks through the train using the mobile device to scan the bar code on the printed or mobile media supplied by the passenger. The passenger's eTicket information, which is retrieved from the data store of eTicket data residing on the mobile device, is displayed to the employee. The employee verifies the passenger's identity and then indicates acceptance of the eTicket on the mobile device, whereupon the device changes the status of the eTicket residing on its data store to "lifted" (i.e., the eTicket has been collected or "lifted" and is considered used). Simultaneously, the device transmits the eTicket status change to the central reservation system (see FIG. 2), utilizing the tiered mobile technology architecture. In instances where the passenger-supplied media references eTicket information for more than one passenger, the mobile device displays the data for all individuals in the traveling party, enabling the employee to accept the eTicket for individual members of the party, should they not all be present, or for then entire party collectively, should they all be together.

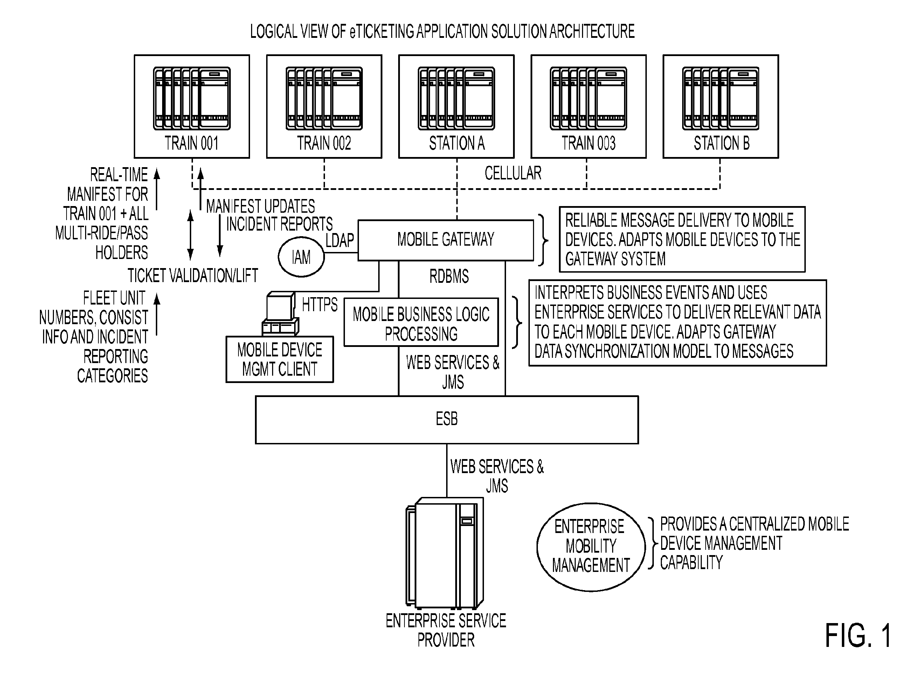

FIG. 1 is a logical decomposition diagram of an electronic ticketing application solution (ETAS) architecture according to an embodiment. The ETAS architecture comprises an Enterprise Service Provider in communication with a mobile device business logic processing system and a mobile gateway via an enterprise service bus (ESB).

In at least some embodiments, the ETAS architecture comprises more than one enterprise service providers.

The Enterprise Service Provider comprises a Central Reservation System and a Work Management System. The Central Reservation System and the Work Management System supply information and provide functionality to an electronic Ticket application through standard communication and/or protocol interfaces. The transmission includes synchronous web services brokered by the Enterprise Service Bus and asynchronous events published to the ESB for subscription-based notification.

The Mobile Device Business Logic Processing (MDBLP) System executes the business logic necessary to interpret business events published to the enterprise by the central reservation system, by other enterprise systems with information pertinent to operating the Mobile Device business model, and to generate ticket validation/query messages from the Mobile Devices via the Mobile Gateway. In at least some embodiments, the MDBLP System stores in memory a set of executable and/or interpretable instructions comprising the business logic. It also receives information from the Mobile Gateway indicative of a Mobile Device coming online or going offline, and information from the Mobile Devices indicative of which train and user each Mobile Device is assigned currently. The system operates by constructing messages destined for one or more Mobile Devices, and by brokering messages from each Mobile Device to the appropriate system.

The Mobile Gateway, Adapters, and Message Delivery system are used to ensure reliable, guaranteed delivery of messages to and from the Mobile Devices and the MDBLP System. The Mobile Gateway determines the state of each Mobile Device at the time contact is established and continues to track the state of each Mobile Device during use so that in the event that connectivity is lost while the Mobile Device is in use, messages being sent to and from the Mobile Device are queued for later delivery.

The Mobile Devices are the operating platform for the onboard business processes and include peripherals necessary to perform business activities. A user interface is coupled to one side of a local data store containing the information needed for the device to function even in the absence of connectivity with the Mobile Gateway. The local data store contains the complete Passenger Name List (PNL) for the train to which it is assigned. The other side of the data store is accessed by logic that coordinates device state (local data store, user and train information) with the Mobile Gateway. Both the user interface (UI) and synchronization services function independently to meet the desired business functionality and systemic qualities by using data and/or information from the same local data store. Access to the device is controlled by an authorization/authentication mechanism that ties back to an Identity & Access Management (IAM) system.

The IAM system supports authorization and authentication of Mobile Device users. In at least some embodiments, authentication is managed by a password/passcode and/or security token and/or biometric device, or one or more other similar technology.

The ESB enables collaboration between enterprise service providers and consumers. The MDBLP system uses ESB-based interfaces and services to subscribe to pertinent business events and to consume services offered by the enterprise.

Enterprise Mobility Management (EMM) centralizes the management of the mobile devices. The capabilities of this system include managing updates to the Mobile Devices; managing provisioning and configuration of the Mobile Devices; and providing a remote-wipe capability so that information on the Mobile Device can be deleted remotely in the event a device is lost or stolen.

FIG. 2 is a sequence flow diagram 200 of primary data flows in a lift application of the ETAS architecture 202, which corresponds to an embodiment of the ETAS architecture of FIG. 1, for logging on to the Mobile Device and associated business applications and initiating the device to begin processing electronic ticket records by uploading a Passenger Name List (PNL) to the Mobile Device.

The MDBLP System comprises a sequence of instructions comprising a Ticket Validation System which receives real-time knowledge of the passenger name list and reservation data for each train and creates and addresses messages to the mobile devices and interprets and responds to messages received from the Mobile Device based on business activities performed using these systems. The Ticket Validation system also interprets and responds to information received from the Mobile Gateway about the current state of each Mobile Device.

As reservations are made in the Central Reservation System (an example of the central reservation system is the Arrow system from the National Passenger Railroad Corporation), the ticketing information is pushed 204 to the Reservation System Façade (RSF). The RSF updates the Electronic Ticket Data Store 206 and then publishes 208 the event to the ESB. The Ticket Validation System receives the event from the ESB as a subscriber to the topic and updates 210 the Mobile Database.

An employee logs into a given Mobile Device by way of, for example, a two-factor authentication process. The login procedure results in the association of the employee with the Mobile Device for a specific train and date through an interaction between the Mobile Device and the Ticket Validation System. The transition of the Mobile Device to an "active" state is managed by the Mobile Gateway and is communicated 212 to the Ticket Validation System during this process, as well. The current state of a given train's Passenger Name List is sent 214 to each Mobile Device assigned to the particular train. In at least some embodiments, the current state of the given train's PNL is transferred to the corresponding mobile devices at the time of assignment of the mobile device to the particular train.

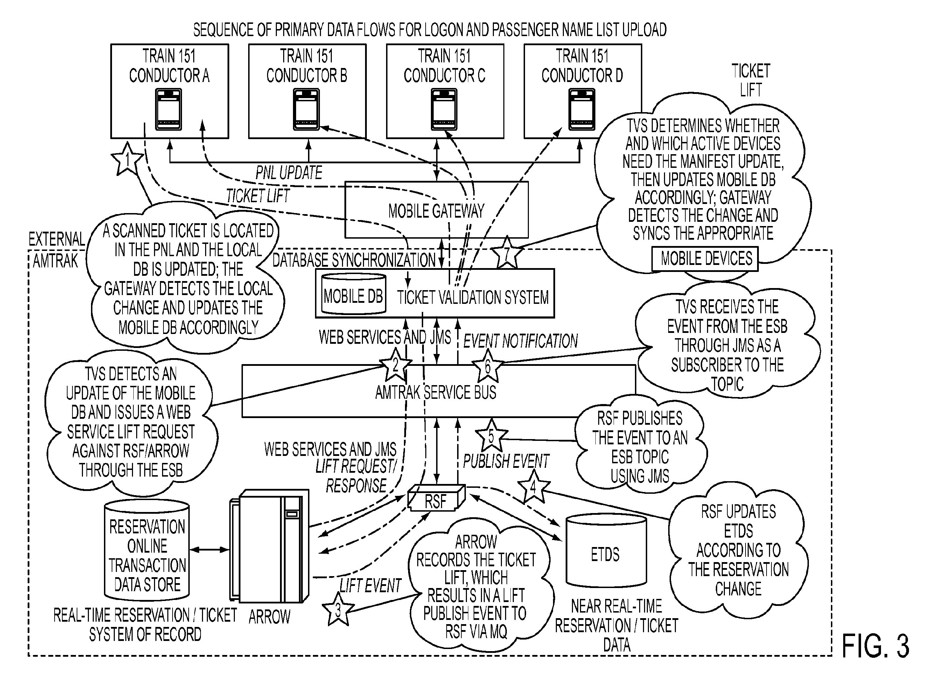

FIG. 3 is a sequence flow diagram of primary data flows that occur when the Mobile Device is used to validate the bar coded travel document presented by the customer and to record the electronic ticket as Lifted.

After the employee scans the customer's bar coded travel document with the Mobile Device, the reservation information is located in the Passenger Name List. If there is more than one passenger on the reservation, the Mobile Device presents all passengers to the employee. In at least some embodiments, the mobile device presents at least a portion of the passenger list to the employee while providing a mechanism for the employee to move through the passenger list and review the entire passenger list. The employee can select to mark as used (i.e., indicate a "Lift" of the ticket) the eTickets for all passengers on the reservation. Alternatively, the employee can select to Lift only specific individuals on the reservation. Once the employee has Lifted an eTicket, the local database on the Mobile Device is updated as well as the Mobile Database on the TVS indicating the ticket has been used. (Figure 3, Flow 1).

The TVS detects an update in the Mobile Database and issues a lift request via the ESB (the ESB in FIG. 3 is represented by Amtrak Service Bus) to the RSF and the Central Reservation System (Figure 3, Flow 2). The Central Reservation System records the ticket as lifted and this results in a publish event to the RSF (Figure 3, Flow 3). The RSF updates the Electronic Ticket Data Store (Figure 3, Flow 4) and then publishes the event to the ESB (Figure 3, Flow 5). The Ticket Validation System receives the event from the ESB as a subscriber to the topic. (Figure 3, Flow 6).

The TVS determines which Mobile Devices are impacted by the PNL update and updates the Mobile Database accordingly. The Mobile Gateway detects the change in the Mobile Database and sends the change to the appropriate Mobile Device so that Mobile Devices associated with the same train are synchronized. (Figure 3, Flow 7). In at least some embodiments, after the mobile gateway detects a change in the mobile database, the mobile gateway transfers the change to all of the affected mobile devices, i.e., all mobile devices associated with the same train.

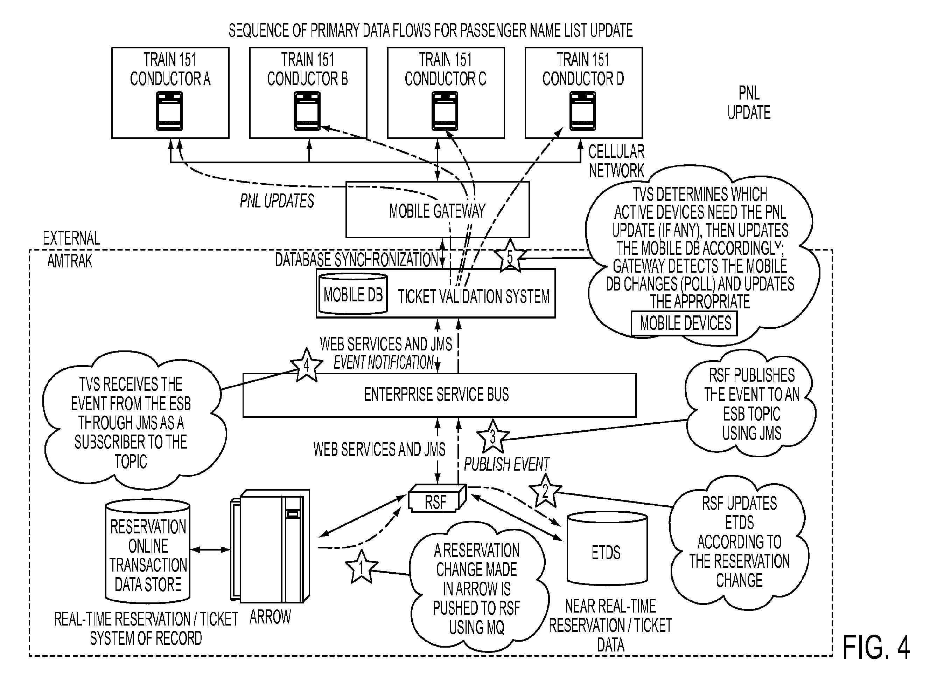

FIG. 4 is a sequence flow diagram of primary data flows in the electronic ticketing lift application for updating the Passenger Name List while the Mobile Device is in use onboard a train.

As reservations are created, changed, cancelled, refunded or modified in some other way in the Central Reservation System (Arrow), the ticketing information is pushed to the Reservation System Façade (RSF). (Figure 4, Flow 1). The RSF updates the Electronic Ticket Data Store (Figure 4, Flow 2) and then publishes the event to the ESB. (Figure 4, Flow 3). The Ticket Validation System receives the event from the ESB as a subscriber to the topic and updates the Mobile Database. (Figure 4, Flow 4).

The TVS determines which Mobile Devices are impacted by the PNL update and updates the Mobile Database accordingly. The Mobile Gateway detects the change in the Mobile Database and sends the change to the appropriate Mobile Device so that Mobile Devices associated with the same train receive the reservation update. (Figure 4, Flow 5). In at least some embodiments, after the mobile gateway detects a change in the mobile database, the mobile gateway transfers the change to all of the affected mobile devices, i.e., all mobile devices associated with the same train.

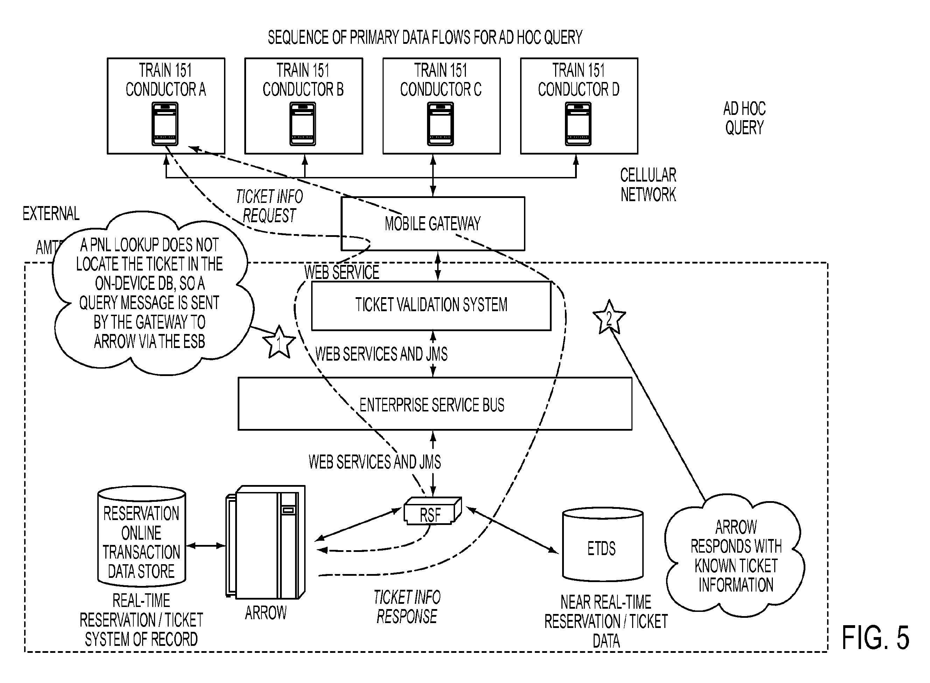

FIG. 5 is a sequence flow diagram of primary data flows that occur when the Mobile Device is used to query the central reservation system (Arrow) to find an electronic ticket that is not available on the Mobile Device's local data store.

If the employee scans a bar-coded travel document that the Mobile Device cannot locate on the mobile device local data store, the mobile gateway transmits a query message to the central reservation system via the ESB (Figure 5, Flow 1). The central reservation system, after determining a response to the query message, responds back to the Mobile Gateway via the ESB with the reservation and ticket information. (Figure 5, Flow 2)

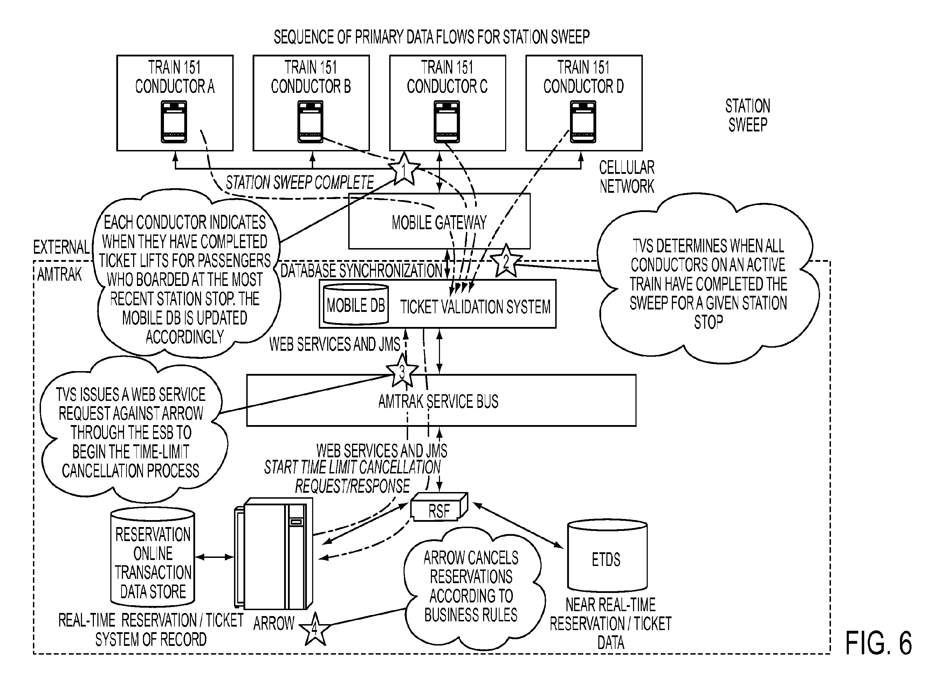

FIG. 6 is a sequence flow diagram of primary data flows that occur when the employee indicates completion of the ticket validation process for all passengers boarding at a specific station.

After the employee indicates via the mobile device that the tickets for passengers boarding at a specific station have been validated, the Mobile Database in the TVS is updated. (Figure 6, Flow 1). The TVS monitors all active employees for a given train to determine when all employees have completed the ticket validation process for a given station stop (Figure 6, Flow 2). After the TVS determines that the ticket validation process is complete for a given station stop, TVS issues a service request to the central reservation system via the ESB to begin the process of identifying which booked customers have not boarded the train. (Figure 6, Flow 3).

FIG. 7 depicts a high-level block diagram of a controller 700 useable in conjunction with one or more embodiments. Controller 700 comprises a processor or controller-based device 702, an input/output (I/O) device 704, and a memory 706 each communicatively coupled with a bus 708. Memory 706 (which may also be referred to as a computer-readable medium) is coupled to bus 708 for storing data and information and instructions to be executed by processor 702. Memory 706 also may be used for storing temporary variables or other intermediate information during execution of instructions to be executed by processor 702. Memory 706 may also comprise a read only memory (ROM) or other static storage device coupled to bus 708 for storing static information and instructions for processor 702. Memory 706 may comprise static and/or dynamic devices for storage, e.g., optical, magnetic, and/or electronic media and/or a combination thereof.

I/O device 704 may comprise a display, such as a cathode ray tube (CRT) or a flat panel display or other illuminating devices such as illuminated icons or pre-arranged light emitting diodes, for displaying information, alphanumeric and/or function keys for communicating information and command selections to the processor 702, a cursor control device, such as a mouse, a trackball, or cursor direction keys for communicating direction information and command selections to the processor and for controlling cursor movement on the display, or a combination thereof. This input device typically has two degrees of freedom in two axes, a first axis (e.g., x) and a second axis (e.g., y) allowing the device to specify positions in a plane. In at least some embodiments, I/O device 704 is optional.

Memory 706 comprises a ticketing system 710 according to one or more embodiments for controlling and/or tracking ticketing of passengers. Ticketing system 710 comprises one or more sets of instructions which, when executed by processor 702, causes the processor to perform particular functionality. In at least some embodiments, ticketing system 710 issues tickets to passengers, maintains a list of passengers and tickets issued, and reconciles lifted tickets with respect to passengers. In at least some embodiments, all or at least a portion of the ETAS architecture functionality is executed on controller 700.

FIG. 8 is a high level block diagram of a portable or transportable computer system including a mobile or cellular telephone (hereinafter referred to as a mobile device 800), upon which at least a portion of an embodiment may be implemented. In at least some embodiments, mobile device 800 is a telephone, a tablet, a personal digital device, a laptop computer, or other processor or controller-based system.

Mobile device 800 includes a bus 802 or other communication mechanism for communicating information, and a processor 804 coupled with the bus 802 for processing information. Mobile device 800 also includes a main memory 806, such as a random access memory (RAM) or other dynamic storage device, coupled to the bus 802 for storing location information and connection information, and instructions to be executed by processor 804. Main memory 806 also may be used for storing temporary variables or other intermediate information during execution of instructions to be executed by processor 804. Mobile device 800 further includes a read only memory (ROM) 808 or other static storage device coupled to the bus 802 for storing static information and instructions for the processor 804. A storage device 810, such as a magnetic disk or optical disk, is provided and coupled to the bus 802 for storing location information, connection information, and instructions.

Mobile device 800 may be coupled via the bus 802 to a display 812, such as an integrated flat panel display, for displaying information to and prompting for information from the user. An input device 814, including alphanumeric and function keys, is coupled to the bus 802 for communicating information and command selections to the processor 804. Another type of user input device is cursor control 816, such as a mouse, a trackball, or cursor direction keys for communicating direction information and command selections to processor 804 and for controlling cursor movement on the display 812. This input device typically has two degrees of freedom in two axes, a first axis (e.g., x) and a second axis (e.g., y) allowing the device to specify positions in a plane.

An embodiment is related to the use of mobile device 800, such as the illustrated system of FIG. 8, to enable use of electronic ticket with respect to one or more passengers during a period before, during, and/or after a trip. According to one embodiment, connection information and location information are provided to mobile device 800 in response to processor 804 executing sequences of instructions contained in main memory 806 in response to input received via input device 814, cursor control 816, or communication interface 818. Such instructions may be read into main memory 806 from another computer-readable medium, such as storage device 810.

However, the computer-readable medium is not limited to devices such as storage device 810. For example, the computer-readable medium may include a floppy disk, a flexible disk, hard disk, magnetic tape, or any other magnetic medium, a CD-ROM, any other optical medium, punch cards, paper tape, any other physical medium with patterns of holes, a random access memory (RAM), a programmable read only memory (PROM), an electrically programmable read-only memory (EPROM), a FLASH-EPROM, any other memory chip or cartridge, a carrier wave embodied in an electrical, electromagnetic, infrared, or optical signal, or any other medium from which a computer can read. Execution of the sequences of instructions contained in the main memory 806 causes the processor 804 to perform the process steps described below. In alternative embodiments, hard-wired circuitry may be used in place of or in combination with computer software instructions to implement the invention. Thus, embodiments of the invention are not limited to any specific combination of hardware circuitry and software.

Mobile device 800 also includes a communication interface 818 coupled to the bus 802. Communication interface 818 provides two-way data communication. For example, communication interface 818 may be an integrated services digital network (ISDN) card, a digital subscriber line (DSL) card, or a modem to provide a data communication connection to a corresponding type of telephone line. As another example, communication interface 818 may be a local area network (LAN) card to provide a data communication connection to a compatible LAN. As described above, wireless links may also be implemented, e.g., IEEE 802 standard wireless connections, and other wireless connections. In any such implementation, communication interface 818 sends and receives electrical, electromagnetic or optical signals which carry digital data streams representing various types of information. Of particular note, the communications through interface 818 may permit transmission or receipt of connection information and location information. For example, two or more Mobile device 800 may be networked together in a conventional manner with each using the communication interface 818.

Network link 820 typically provides data communication through one or more networks to other data devices. For example, network link 820 may provide a connection through a network to a server 700 or to another device, e.g., desktop computer system. The signals through the various networks and the signals on network link 820 and through communication interface 818, which carry the digital data to and from mobile device 800, are exemplary forms of carrier waves transporting the information.

Mobile device 800 sends messages and receives data, including program code, through the network(s), network link 820 and communication interface 818. In the Internet example, a server 700 might transmit a requested code for an application program through network link 820, and communication interface 818. In accordance with one embodiment, one such downloaded application provides for viewing, verifying, and modifying the status of an electronic ticket of a passenger.

The received code may be executed by processor 804 as it is received, and/or stored in storage device 810, or other non-volatile storage for later execution. In this manner, Mobile device 800 may obtain application code via a carrier wave.

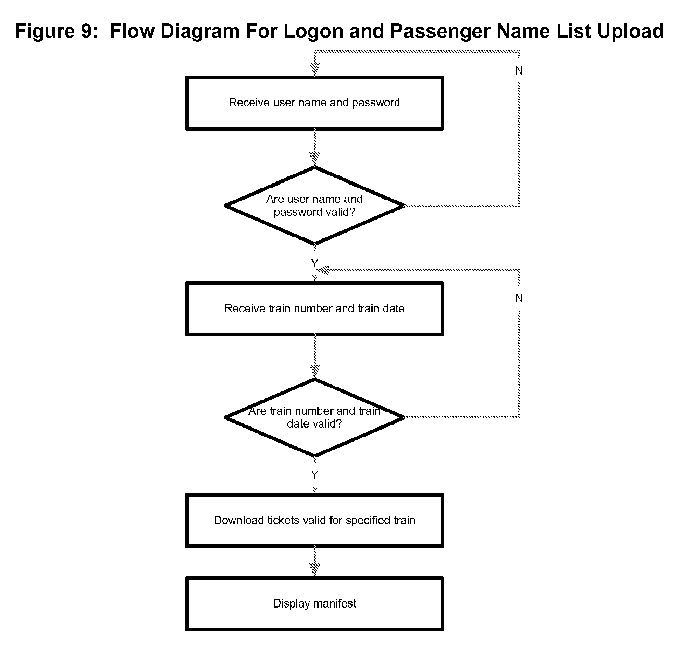

FIG. 9 depicts the flow diagram presenting a method for an employee to log into and initiate the eLift application on the Mobile Device. Employees with responsibility for ensuring passengers have paid their fare are equipped with a Mobile Device which includes the eLift application. The employee logs on to the eLift application by providing user credentials such as a username and password. Once the employee has been validated, the eLift application displays a screen which allows the user to enter the train number and train date of a specified train using a touchscreen user interface. Upon successful log-on, eTicket data for all reservations which are valid for the train in question is wirelessly uploaded via a wi-fi or cellular connection to the eLift application on the Mobile Device.

The eLift application provides the employee with a passenger manifest displaying passengers expected to board and detrain at each station stop. In addition, the user application highlights those stations where passengers requiring special assistance are expected to board or detrain.

As additional sales, cancellations, exchanges or refunds occur that pertain to the train in question, the eLift application on the Mobile Device will receive near-real time updates which will be reflected on the user interface of the device.

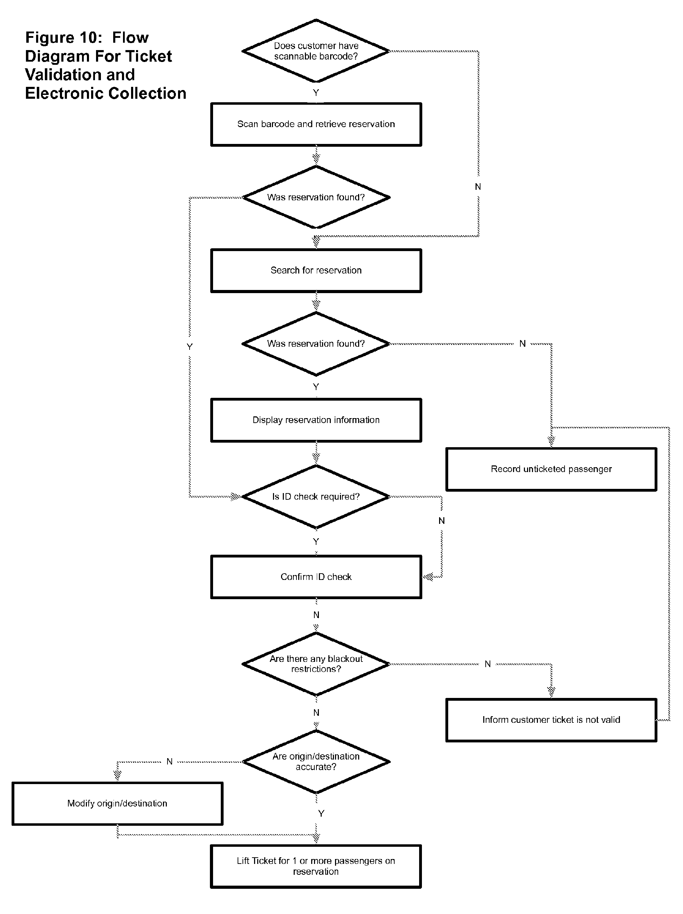

FIG 10 depicts the flow diagram presenting a method for an employee to use the eLift application to search for a reservation, confirm a ticket is valid for a specific train and electronically collect that ticket

The employee walks through the train using the Mobile Device to scan the bar-code on the printed or mobile media supplied by the passenger. Should the customer not provide a bar-code that can be scanned, the eLift application provides the employee with the ability look up the customer's eTicket using the customer name, reservation confirmation number or frequent traveler number using the touchscreen interface.

The passenger's eTicket information, which is retrieved from the data store of eTicket data residing on the Mobile Device, is displayed on the user interface to the employee. In instances where the reservation includes more than one passenger, the user interface of the Mobile Device will display the data for all individuals in the traveling party, enabling the employee to accept the eTicket for individual members of the party, should they not all be present, or for then entire party simultaneously, should they all be together. The passenger's eTicketing information displayed on the user interface includes identifying detail such as ticket type, special service requests and other detailed ticketing information.

If it is required, the eLift application prompts the employee to verify the passenger's identity via the touchscreen user interface. Once identification is confirmed, the eLift application confirms that the ticket is valid for travel on the specified train and date.

If the eLift application determines that the ticket is not valid, the user interface displays a message to the employee indicating why the ticket is not valid. Such messages may reflect that the ticket has already been used, refund or cancelled or that the ticket is not valid for the specified train or date.

If a passenger boards the train without a valid ticket, the eLift application provides the employee with the ability to document that passenger onboard the train by entering the passenger's identifying information into the user interface.

If it is required, the employee may modify the origin and destination of the passenger using the touchsreen interface of the Mobile Device.

The employee indicates acceptance of the eTicket on the Mobile Device, whereupon the eLift application changes the status of the eTicket residing on its data store to "lifted" (i.e., the eTicket has been collected or "lifted" and is considered used). At this time, the user interface provides an indicator on the display to visually remind the employee that the ticket has been lifted. Simultaneously, the Mobile Device transmits the eTicket status change to the central reservations system (see figure 2), utilizing the tiered mobile technology architecture.

A manifest of passengers that are confirmed to be on board a train is established as each passenger's travel document is validated aboard the train.

The manifest information is maintained in the central reservations system as well as within the eLift application on the Mobile Device itself. This manifest is viewable by the employee on the user interface of the Mobile Device.

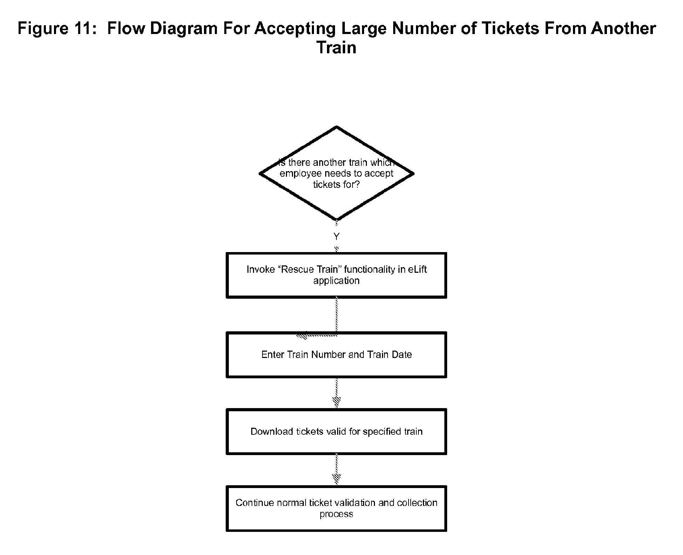

FIG 11 depicts the flow diagram presenting a method for an employee to use the eLift application to accept a large number of tickets for another train

If the employee is directed by their management to accept a large number of passengers from another train onto their specified train (ex. if another train has a mechanical issue), the eLift application provides the employee with the ability to download the eTickets that are valid for the 2^{nd} train onto their Mobile Device whereupon those eTickets can be validated and collected following the normal process.

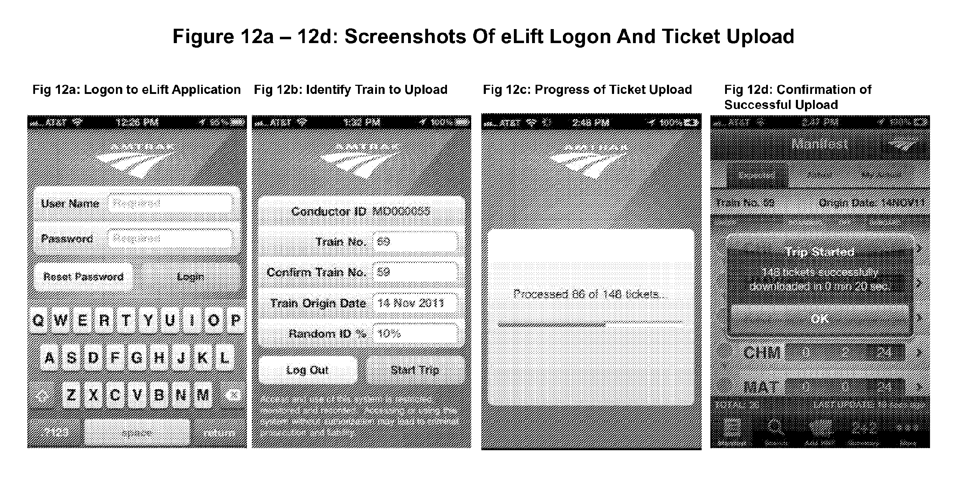

As illustrated in FIG 12a, upon invoking the eLift application, the employee is presented with a login screen providing the employee with the ability to enter their user name and password on the touchscreen interface. Fig 12b presents an example of the screen the employee uses to enter the train number and train date that the employee wishes to validate eTickets on. Fig 12c-12d further illustrate the eTicket upload process where the employee is provided with visual confirmation of the number of tickets uploaded to his mobile device and the successful completion of the upload process.

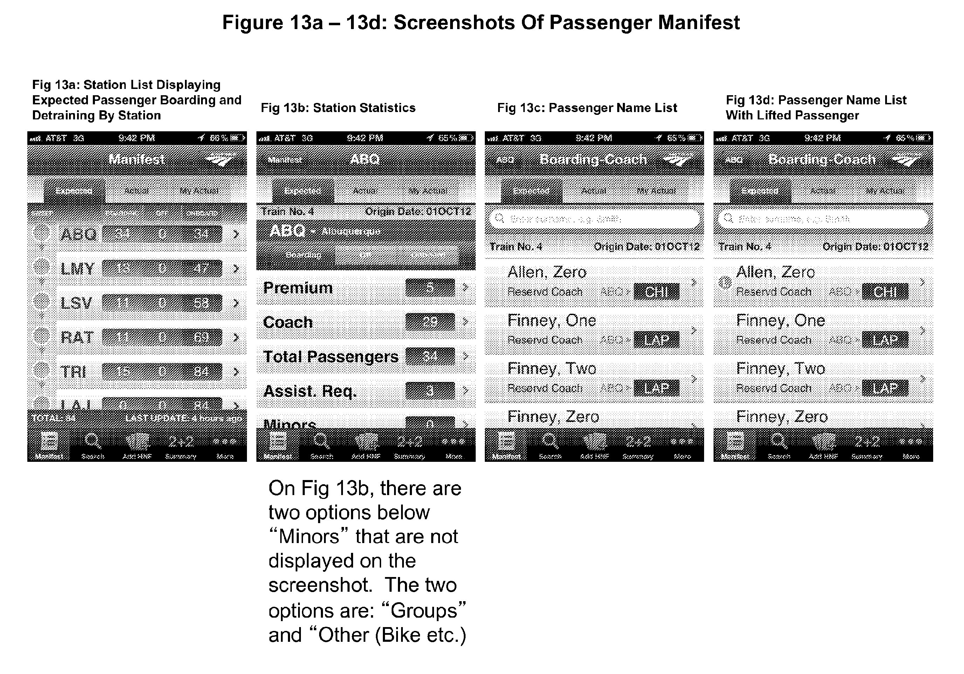

Fig 13a-13c illustrate the passenger manifest that is displayed on the user interface of the Mobile Device. Fig 13a provides the employee with a list of the stations along the train route with a count of passengers expected to board and detrain at each station stop. Furthermore, Fig 13a highlights station stops which have passengers boarding or detraining which may require special assistance. The eLift application allows the employee to gain further information on each station by touching the station name whereupon the station statistic information in Fig 13b is displayed. The employee may gain access to the passenger name list for each of the categories displayed in Fig 13b by touching the desired category whereupon the passenger name list in Fig 13c is displayed.

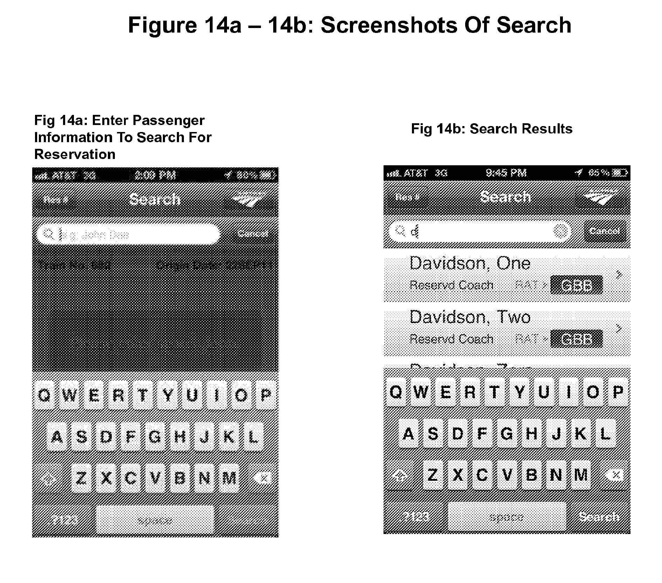

Fig 14a-14b illustrate the search process that an employee will use when the customer does not have a scannable bar-code. As illustrated in Fig 14a, the employee can begin typing the identifying information in the user interface whereupon the application will filter the passenger name list as illustrated in Fig 14b.

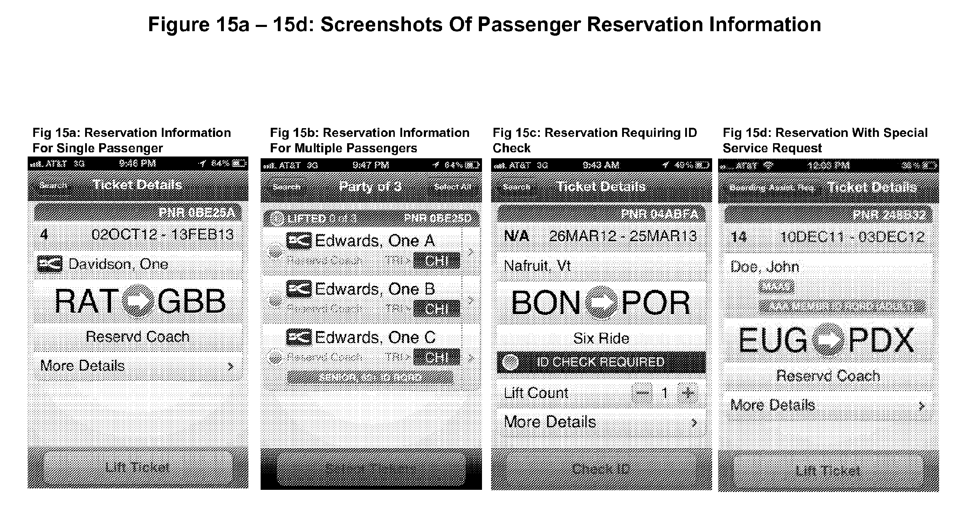

Fig 15a-15d illustrate some of the reservation information, including the ticket type, that is returned when a reservation is found either through scanning a barcode or by searching using search. Fig 15b is an illustration of a reservation which contains more than one passenger and Fig 15c displays a reservation which requires the employee to confirm that the passenger's identification has been checked. Fig 15d displays a reservation which contains a special service request which will prompt the employee to take the action required to provide the special service.

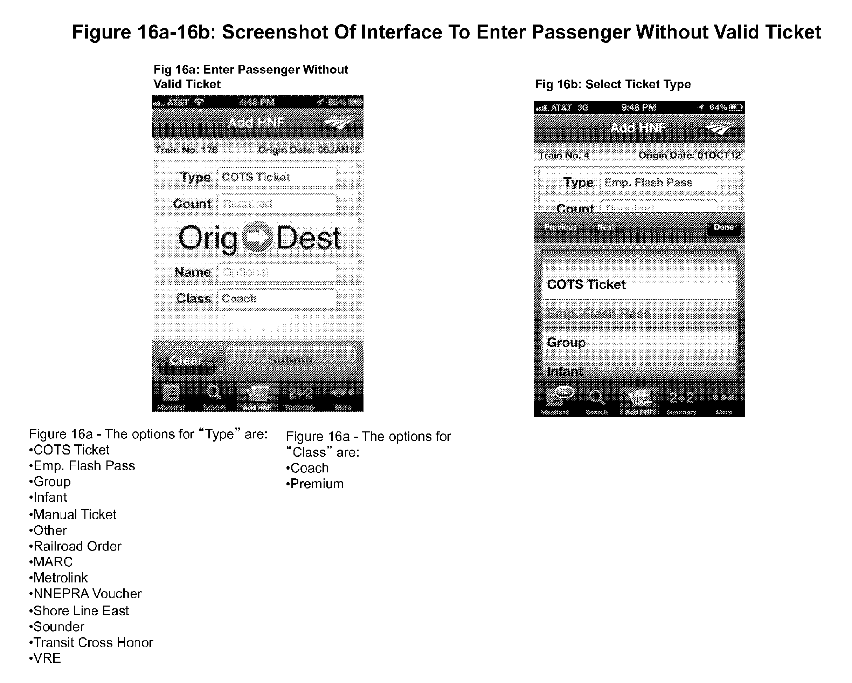

Fig 16 illustrates the ability for the employee to enter identifying information for passengers which do not have valid tickets for the specified train. The employee may use the touchscreen interface to identify the type of ticket, the number of passengers and a passenger name so that these unticketed passengers can be documented on the passenger manifest.

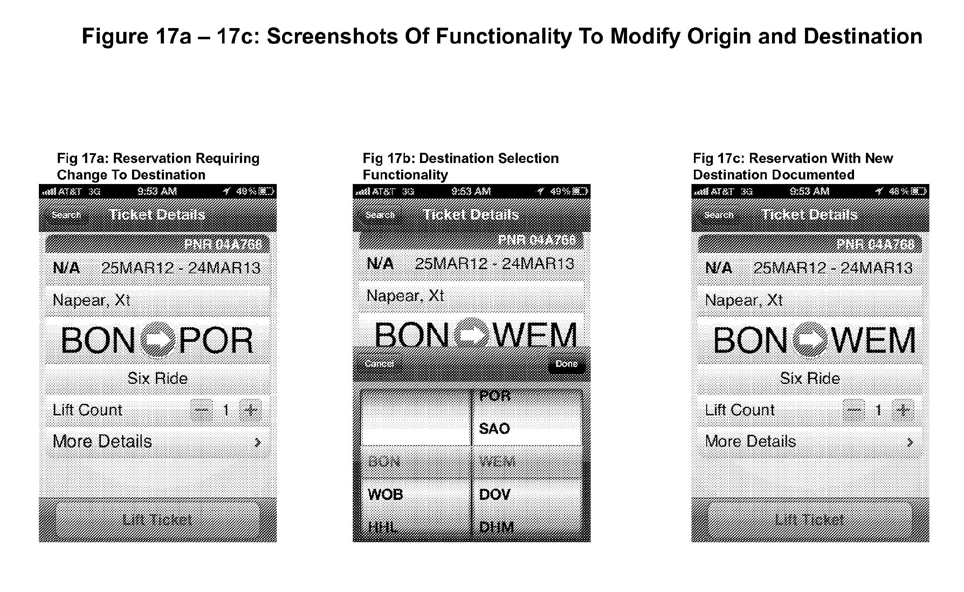

Fig 17a-17c the functionality that the eLift application provides to the employee to modify the Origin and/or Destination of a passenger using the touchscreen user interface. Fig 17b illustrates the ability for the employee to efficiently select the new Origin/Destination by scrolling through the valid options for the specified train. Fig 17c illustrates the documentation of the Origin/Destination selected by the employee.

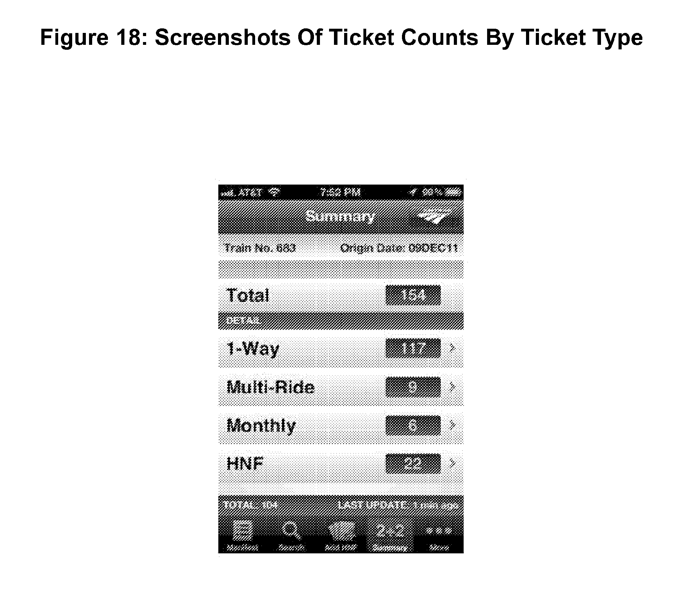

Fig 18 illustrates the ability for the employee to view information on the number of tickets by ticket type that have been lifted on the specified train.

One or more embodiments of the present invention are directed toward systems, methods, and user interfaces (UI) for ticket validation and collection by a railroad employee. The method of the present invention comprises providing the user with a touchscreen interface displayed on a mobile communication device to validate and electronically collect tickets of passengers onboard the train. The user interface processor and mobile communication device are in communication via a wireless or cellular network.

A touchscreen interface is provided which provides the means for logging onto a mobile device and indicating a specific train to be worked. single or multiple embodiments, the interface processor and mobile communication device are in communication via a wireless network. For example, a wireless connection can be established by the mobile communication device being placed in communication with a wireless access point that is in communication with a server hosting the interface processor.

An interface is generated that displays all expected and actual passenger counts for each station stop along the route. The UI also displays passenger names and ticket details for all passengers holding a valid reservation for the train specified. The UI provides detail information on each ticket including if the ticket has already been marked as used, refunded, cancelled or modified. The touchscreen interface provides the user with the ability to efficiently view all displayed information.

A touchscreen interface is presented which allows the user to search for reservations by several means including scanning a barcode or typing in identifying information about the reservation. Once the reservation is found, the interface displays all passengers associated with the reservation.

The touchscreen interface is presented which allows the user to view ticket details, validate that the ticket presented is valid for the specified train, confirm passenger identification if required, document that the passenger is onboard the train and indicate that the ticket has been used.

The touchscreen user interface of the present invention also allows the user to document the presence of a passenger who is not holding a valid ticket for the specified train. The touchscreen user interface provides the capability to indicate identifying details for the passenger and the origin and destination to be traveled.

The system further comprises a touchscreen user interface which allows the user to accept passengers with tickets from different trains and to record their presence on the train specified by the user.

The touchscreen user interface also provides the user with the ability to indicate when all tickets for a particular station have been validated and electronically collected.

The touchscreen user interface provides the user with the ability to display information for the train including passenger counts and fare information.

It will be readily seen by one of ordinary skill in the art that the disclosed embodiments fulfill one or more of the advantages set forth above. After reading the foregoing specification, one of ordinary skill will be able to affect various changes, substitutions of equivalents and various other embodiments as broadly disclosed herein. It is therefore intended that the protection granted hereon be limited only by the definition contained in the appended claims and equivalents thereof.

## Claims

1. A system for use of an electronic ticket, called eTicket, the system comprising at least one server storing data relating to the eTickets reserved for at least one train and at least one mobile device communicating with said at least one server, **characterized in that** :
- said mobile device comprises a user interface which presents the passenger information for eTickets on a specific train and, based on data sent from the server to the mobile device, displaying reservations for passengers holding tickets which may be valid for the specified train passenger names, displayinga passenger manifest including passenger counts for passengers boarding and detraining at each station and possibly passengers who require special assistance at each station,
- said server and mobile device communicate for generating and updating the passenger manifest with new reservations or changes to existing reservations while the specified train is in motion.

2. A method for managing electronic tickets, called eTickets, by a system comprising at least one server storing data relating to the eTickets reserved for at least one train and at least one mobile device communicating with said at least one server, **characterized in that** the method is a computer-implemented method comprising presenting a user interface which presents the passenger information for eTickets on a specific train and further comprises:
displaying, on a screen of the Mobile Device of a user, a touchscreen interface for displaying reservations for passengers holding tickets which may be valid for the specified train passenger names
displaying, on a screen of a Mobile Device of a user, the passenger manifest including passenger counts for passengers boarding and detraining at each station and possibly passengers who require special assistance at each station;
generating and updating the passenger manifest with new reservations or changes to existing reservations while the specified train is in motion, through communication between the server and the mobile device.

3. A method according to claim 2, **characterized in that** it comprises finding a specific reservation on a Mobile Device through the use of scanning a barcode or via a manual search method on said mobile device based on data received from said server.

4. A method according to claim 2 or 3, **characterized in that** it comprises validating that a specific ticket is valid for travel on a specific train, by implementation of at least :
Validation that the ticket has not been used, refunded, cancelled or otherwise modified so as to not be valid for the specified train.
Validation that the ticket does not contain blackout restrictions which prevent use on the specified train

5. A method according to any one of claims 2 to 4, **characterized in that** it comprises accurately recording, on said Mobile Device, passengers that are onboard a specific train, by implementation of at least:
Indicate that a specific ticket has been lifted on the specified train by modifying a ticket status to indicate that the ticket has been used.
Modifying an origin and/or destination to accurately reflect the customers intended travel itinerary .
Providing a means to document customers onboard the train who do not have valid tickets for the specified train

6. A method for finding a specific reservation on a Mobile Device through the use of scanning a barcode or via a manual search method .

7. A method of validating on a Mobile Device that a specific ticket is valid for travel on a specific train, the method comprising:
Validation that the ticket has not been used, refunded, cancelled or otherwise modified so as to not be valid for the specified train.
Validation that the ticket does not contain blackout restrictions which prevent use on the specified train.

8. A method of accurately recording on a Mobile Device passengers that are onboard a specific train, the method comprising:
Indicate that a specific ticket has been lifted on the specified train by modifying a ticket status to indicate that the ticket has been used.
Modifying an origin and/or destination to accurately reflect the customers intended travel itinerary.
Providing a means to document customers onboard the train who do not have valid tickets for the specified train.

9. A system for use of an electronic ticket, **characterized in that** it comprises means for implementation of at least one of the claims 2 to 8.
